# EUROPEAN PATENT APPLICATION

(11) **EP 1 524 712 A2**
(43) Date of publication of application: **20.04.2005**
(21) Application number: 04023330.6
(22) Date of filing: 30.09.2004
(51) Int. Cl.: H01M 8/04

(54) **Fuel cell system and operation method thereof**

(30) Priority: 01.10.2003 JP 2003343328
(71) Applicant: Matsushita Electric Industrial Co., Ltd., Kadoma-shi, Osaka 571-8501 (JP)
(72) Inventor: Hori, Yoshihiro, Ikoma-shi Nara 630-0141 (JP); Yoshimura, Mikiko, Hirakata-shi Osaka 573-0036 (JP); Ukai, Kunihiro, Ikoma-shi Nara 630-0213 (JP); Wakita, Hidenobu, Yawata-shi Kyoto 614-8363 (JP); Uchida, Makoto, Hirakata-shi Osaka 573-1145 (JP)
(74) Representative: Patentanwälte Leinweber & Zimmermann

(57) **Abstract**

A fuel cell system is disclosed, including a fuel cell configured to generate an electric power using a fuel gas and an oxidizing gas supplied to the fuel cell, and a total enthalpy heat exchanger configured to heat and humidify the oxidizing gas using heat and water exhausted from the fuel cell, wherein the total enthalpy heat exchanger is capable of removing impurities contained in the oxidizing gas from the oxidizing gas.

## Description

### Background of the Invention

### 1. Field of the Invention

The present invention relates to a fuel cell system. More particularly, the present invention relates to a polymer electrolyte fuel cell system.

### 2. Description of the Related Art

In recent years, concern about environmental problems has been increasing on a global scale, under the influence of global warming, acid rain, and the like, due to carbon dioxide. So, in a field of power supply development, attention has been focused on a fuel cell system capable of energy change which is highly efficient and keeps the environment clean without emission of carbon dioxide. Among various fuel cell systems, particular attention has been paid to a polymer electrolyte fuel cell system that operates at a low temperature and has high output density, which is expected to be used as civil power supply, power supply for power-driven automobile, etc.

Now, an example of the conventional polymer electrolyte fuel cell system will be described with reference to the drawings.

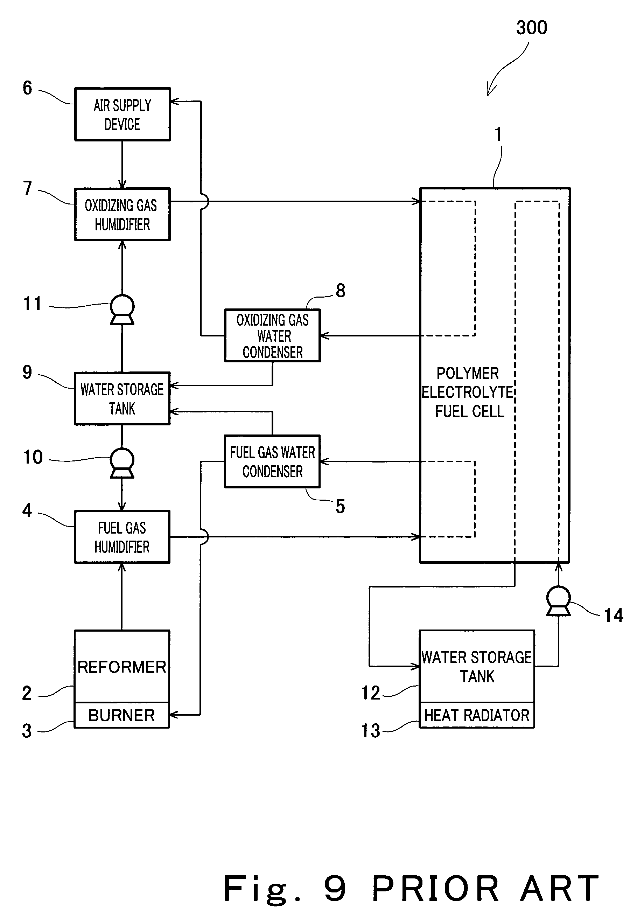

Fig. 9 is a block diagram schematically showing a construction of the example of the conventional polymer electrolyte fuel cell system.

Referring now to Fig. 9, a polymer electrolyte fuel cell system 300 comprises a polymer electrolyte fuel cell 1, a reformer 2 configured to reform a feed gas such as a city gas to generate a hydrogen-rich fuel gas, a burner 3 configured to heat the reformer 2 up to a temperature required for a reforming reaction, a fuel gas humidifier 4 configured to humidify the fuel gas supplied to the polymer electrolyte fuel cell 1, a fuel gas water condenser 5 configured to cool the fuel gas exhausted from the polymer electrolyte fuel cell 1 to condense steam contained in the fuel gas into water, an air supply device 6 configured to supply air (hereinafter referred to as oxidizing gas) to the polymer electrolyte fuel cell 1, an oxidizing gas humidifier 7 configured to humidify the oxidizing gas supplied to the polymer electrolyte fuel cell 1, an oxidizing gas water condenser 8 configured to cool the oxidizing gas exhausted from the polymer electrolyte fuel cell 1 to condense steam contained in the oxidizing gas into water, a water storage tank 9 configured to store water obtained by the fuel gas water condenser 5 and the oxidizing gas water condenser 8, a fuel gas water pump 10 configured to send the water stored in the water storage tank 9 to the fuel gas humidifier 4, and an oxidizing gas pump 11 configured to send the water stored in the water storage tank 9 to the oxidizing gas humidifier 7. The polymer electrolyte fuel cell system 300 further comprises a water storage tank 12 configured to store cooling water used for keeping the polymer electrolyte fuel cell 1 generating heat during an operation at a predetermined temperature, a cooling water pump 14 configured to circulate the cooling water stored in the water storage tank 12 to cause the cooling water to flow within the polymer electrolyte fuel cell 1, and a heat radiator 13 configured to radiate heat of the cooling water to outside of the polymer electrolyte fuel cell system 300.

Subsequently, an example of an operation of the conventional polymer electrolyte fuel cell system 300 will be described with reference to the drawings.

In the polymer electrolyte fuel cell system 300 constructed as shown in Fig. 9, the hydrogen-rich fuel gas generated in the reformer 2 is humidified in the fuel gas humidifier 4 using the water supplied from the water storage tank 9 by the fuel gas pump 10, and then supplied to the polymer electrolyte fuel cell 1. Meanwhile, the oxidizing gas is supplied from the air supply device 6 to the oxidizing gas humidifier 7, and humidified therein using water supplied from the water storage tank 9 by the oxidizing gas pump 11, and the resulting humidified oxidizing gas is supplied to the polymer electrolyte fuel cell 1. Using the fuel gas and the oxidizing gas, the polymer electrolyte fuel cell 1 generates an electric power. The fuel gas remaining unconsumed after a power generation reaction in the polymer electrolyte fuel cell 1 is exhausted from the polymer electrolyte fuel cell 1. The fuel gas is cooled and dehumidified in the fuel gas water condenser 5 and thereafter supplied to the burner 3. The oxidizing gas remaining unconsumed after the power generation reaction in the polymer electrolyte fuel cell 1 is exhausted from the polymer electrolyte fuel cell 1. The oxidizing gas is cooled and dehumidified in the oxidizing gas water condenser 8 and thereafter supplied to the air supply device 6. In order to keep the polymer electrolyte fuel cell 1 generating heat during power generation at a constant temperature, the cooling water pump 14 operates to circulate the cooling water within the water storage tank 12 to allow the cooling water to flow within the polymer electrolyte fuel cell 1. In this manner, the polymer electrolyte fuel cell 1 is kept at a constant temperature. The cooling water which has increased in temperature is cooled by the heat radiator 13.

For the purpose of temperature-increasing and humidifying an oxidizing gas to predetermined temperature and humidity, there has been proposed a method in which total enthalpy heat exchange is conducted between the oxidizing gas and cooling water exhausted from a fuel cell and having increased temperature (e.g., see Japanese Laid-Open Patent Application Publications Nos. 2002-231282 and 2000-3720).

In addition, for the purpose of removing impurities such as nitrogen oxide or sulfur oxide or other organic compounds, which may be contained in an oxidizing gas, there has been proposed a method in which filters or the like are provided at an inlet and an outlet of an air supply device to remove the impurities (e.g., see Japanese Laid-Open Patent Application Publication No. Hei. 8 - 138703).

By the way, recently, the use of the polymer electrolyte fuel cell system has been anticipated. And, in order to put the polymer electrolyte fuel cell system into practical use in applications of the civil power supply, power supply for power-driven automobile, and so on, it is important to improve power generation efficiency and cell life characteristic. In order to achieve these objects, inhibiting entry of the impurities such as nitrogen oxide or sulfur oxide or other organic compounds, which may be contained in the oxidizing gas, into the polymer electrolyte fuel cell, is effective.

However, if the filters are provided at the inlet and the outlet of the air supply device to remove the impurities such as the organic compounds from the oxidizing gas as described above, the air supply device and hence the polymer electrolyte fuel cell system will have intricate structures. Such a problem impedes reduction of cost of the polymer electrolyte fuel cell system, and consequently, makes it difficult for the polymer electrolyte fuel cell system to be put into practical use in the applications the civil power supply, the power supply for power-driven automobile, and so on.

### SUMMARY OF THE INVENTION

The present invention has been developed under the circumstances, and an object of the present invention is to provide a polymer electrolyte fuel cell system which is inexpensive, is similar in construction to the conventional polymer electrolyte fuel cell system, and is capable of effectively removing impurities such as organic compounds from air to improve electric characteristic and life characteristic.

According to one aspect of the present invention, there is provided a polymer electrolyte fuel cell system comprising: a fuel cell configured to generate an electric power using a fuel gas and an oxidizing gas supplied to the fuel cell; and a total enthalpy heat exchanger configured to heat and humidify the oxidizing gas using heat and water exhausted from the fuel cell, wherein the total enthalpy heat exchanger is capable of removing impurities contained in the oxidizing gas from the oxidizing gas.

In such a construction, the oxidizing gas is increased in temperature and humidified concurrently with removal of impurities such as nitrogen oxide or sulfur oxide or other organic compounds. Consequently, it is possible to provide an inexpensive polymer electrolyte fuel cell system which is similar in construction to the conventional polymer electrolyte fuel cell system and achieves improved electric characteristic and life characteristic.

The total enthalpy heat exchanger may be equipped with a heater capable of decomposing or separating the removed impurities.

In such a construction, since the heater heats the total enthalpy heat exchanger, the impurities remaining in the interior of the total enthalpy heat exchanger are decomposed or separated to allow the impurity removing function of the total enthalpy heat exchanger to be restored. Consequently, it is possible to provide an inexpensive polymer electrolyte fuel cell system which is similar in construction to the conventional polymer electrolyte fuel cell system and achieves improved electric characteristic and life characteristic for a long time period.

The total enthalpy heat exchanger may have a total enthalpy heat exchange membrane configured to heat and humidify the oxidizing gas by total enthalpy heat exchange, and an impurity removal layer may be formed on one principal surface of the total enthalpy heat exchange membrane, which contacts the oxidizing gas, to remove the impurities.

Since the impurities such as nitrogen oxide or sulfur oxide or other organic compounds, which may be contained in air, can be removed by a simple construction, it is not necessary to provide a filter for removing the impurities.

The oxidizing gas supplied to the fuel cell may be heated and humidified using an oxidizing gas exhausted from the fuel cell.

Since the oxidizing gas exhausted from the fuel cell has heat and water sufficient to heat and humidify the oxidizing gas supplied to the fuel cell, it is possible to adjust the oxidizing gas supplied to the fuel cell to a predetermined state.

The oxidizing gas supplied to the fuel cell may be heated and humidified using cooling water exhausted from the fuel cell.

Since the heated cooling water exhausted from the fuel cell has heat and water sufficient to heat and humidify the oxidizing gas supplied to the fuel cell, it is also possible to adjust the oxidizing gas supplied to the fuel cell to a predetermined state.

The impurity removal layer may be formed of porous adsorbent.

Since such an impurity removal layer is capable of effectively removing the impurities such as nitrogen oxide or sulfur oxide or other organic compounds, which may be contained in air, the electric characteristic and life characteristic of the polymer electrolyte fuel cell system can be greatly improved.

The impurity removal layer may be formed of porous adsorbent carrying transition metal thereon.

Since such an impurity removal layer is capable of more effectively removing the impurities such as nitrogen oxide or sulfur oxide or other organic compounds, which may be contained in air, the electric characteristic and life characteristic of the polymer electrolyte fuel cell system can be further improved.

The transition metal may be at least one of platinum, palladium, rhodium, ruthenium, iridium, nickel, iron, copper, and silver.

Since these transition metals are available relatively easily, and relatively inexpensive, the impurity removal layer formed on the total enthalpy heat exchange membrane, and hence the total enthalpy heat exchange membrane can be produced in a relatively inexpensive manner.

The impurity removal layer may be formed of porous adsorbent carrying metal oxide thereon.

Since such an impurity removal layer is capable of more effectively removing the impurities such as nitrogen oxide or sulfur oxide or other organic compounds, which may be contained in air, the electric characteristic and life characteristic of the polymer electrolyte fuel cell system can be further improved.

The metal oxide may be at least one of aluminum oxide, silicon oxide, zinc oxide, manganese oxide, iron oxide, copper oxide, calcium oxide, and magnesium oxide.

Since these metal oxides are available relatively easily, and relatively inexpensive, the impurity removal layer formed on the total enthalpy heat exchange membrane, and hence the total enthalpy heat exchange membrane can be produced in a relatively inexpensive manner.

The impurity removal layer may be formed of porous adsorbent carrying zeolite thereon.

Since such an impurity removal layer is capable of more effectively removing the impurities such as nitrogen oxide or sulfur oxide or other organic compounds, which may be contained in air, the electric characteristic and life characteristic of the polymer electrolyte fuel cell system can be further improved.

The zeolite may be at least one of Mordenite, A-zeolite, MF-zeolite, β-zeolite, and Faujasite.

Since these zeolites are available relatively easily and relatively inexpensive, the impurity removal layer formed on the total enthalpy heat exchange membrane, and hence the total enthalpy heat exchange membrane can be produced in a relatively inexpensive manner.

The porous adsorbent may be made of active carbon or silica gel. Since the active carbon or silica gel are available easily and inexpensive, the impurity removal layer formed on the total enthalpy heat exchange membrane, and hence the total enthalpy heat exchange membrane can be produced in an inexpensive manner.

According to another aspect of the present invention, there is provided a method of operating a polymer electrolyte fuel cell system comprising a fuel cell configured to generate an electric power using a fuel gas and an oxidizing gas supplied to the fuel cell, and a total enthalpy heat exchanger configured to heat and humidify the oxidizing gas using heat and water exhausted from the fuel cell, the method comprising the steps of: removing impurities contained in the oxidizing gas from the oxidizing gas in the total enthalpy heat exchanger; heating the total enthalpy heat exchanger which has removed the impurities using a heater capable of decomposing or separating the impurities to decompose or separate the impurities, before the fuel cell starts or stops power generation; and discharging the decomposed or separated impurities from the total enthalpy heat exchanger.

In such a configuration, since the impurities remaining in the interior of the total enthalpy heat exchanger are decomposed or separated on a regular basis, the impurity removing function of the total enthalpy heat exchanger can be restored on a regular basis. Consequently, the polymer electrolyte fuel cell system has stable electric characteristic and life characteristic over a long time period.

The above and further objects and features of the invention will more fully be apparent from the following detailed description with accompanying drawings.

### Brief Description of the Drawings

Fig. 1 is a block diagram schematically showing a polymer electrolyte fuel cell system according to a first embodiment of the present invention;
Fig. 2 is a schematic view conceptually explaining an operation principle of an impurity removal total enthalpy heat exchanger according to the embodiment of the present invention;
Fig. 3 is a perspective view schematically showing an example of a construction of the impurity removal total enthalpy heat exchanger according to the embodiment of the present invention;
Fig. 4 is a graph showing a test result of a cell life test in the polymer electrolyte fuel cell system according to an example 1;
Fig. 5 is a graph showing a test result of a cell life test in the polymer electrolyte fuel cell system according to an example 2;
Fig. 6 is a graph showing a test result of a cell life test in the polymer electrolyte fuel cell system according to an example 3;
Fig. 7 is a graph showing a test result of a cell life test in the polymer electrolyte fuel cell system according to an example 4;
Fig. 8 is a block diagram schematically showing a construction of a polymer electrolyte fuel cell system according to a second embodiment of the present invention; and
Fig. 9 is a block diagram schematically showing a construction of an example of the conventional polymer electrolyte fuel cell system.

### Detailed Description of the Preferred Embodiments

Hereinafter, embodiments of the present invention will be described with reference to the drawings.

### (Embodiment 1)

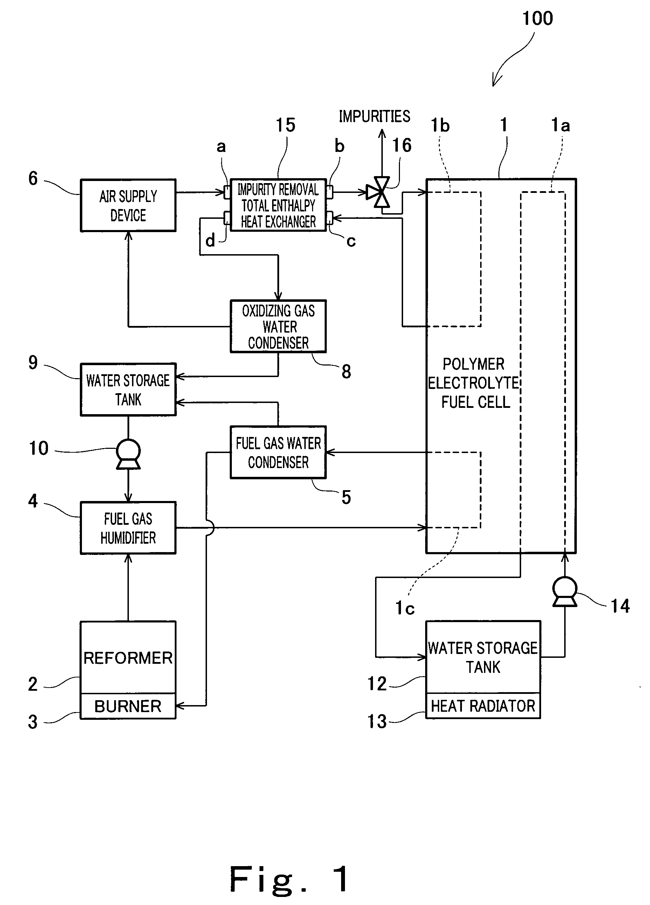

Fig. 1 is a block diagram schematically showing a construction of a polymer electrolyte fuel cell system according to a first embodiment of the present invention.

First of all, the construction of the polymer electrolyte fuel cell system according to the first embodiment of the present invention will be described with reference to the drawings.

Referring now to Fig. 1, a polymer electrolyte fuel cell system 100 according to the first embodiment comprises a polymer electrolyte fuel cell 1, a reformer 2 configured to reform a feed gas such as a city gas to generate a hydrogen-rich fuel gas, a burner 3 configured to heat the reformer 2 up to a temperature required for a reforming reaction, a fuel gas humidifier 4 configured to humidify the fuel gas supplied to the polymer electrolyte fuel cell 1, a fuel gas water condenser 5 configured to cool the fuel gas exhausted from the polymer electrolyte fuel cell 1 to condense steam contained in the fuel gas into water, an air supply device 6 configured to supply an oxidizing gas to the polymer electrolyte fuel cell 1, an impurity removal total enthalpy heat exchanger 15 configured to humidify and temperature-increase the oxidizing gas supplied to the polymer electrolyte fuel cell 1 and to remove impurities from the oxidizing gas, an oxidizing gas water condenser 8 configured to cool the oxidizing gas exhausted from the impurity removal total enthalpy heat exchanger 15 to condense steam contained in the oxidizing gas into water, a water storage tank 9 configured to store water obtained by the fuel gas water condenser 5 and the oxidizing gas water condenser 8, and a fuel gas water pump 10 configured to send the water stored in the water storage tank 9 to the fuel gas humidifier 4.

The polymer electrolyte fuel cell system 100 further comprises a water storage tank 12 configured to store cooling water used for keeping the polymer electrolyte fuel cell 1 generating heat during an operation at a predetermined temperature, a cooling water pump 14 configured to circulate the cooling water stored in the water storage tank 12 to cause the cooling water to flow within the polymer electrolyte fuel cell 1, and a heat radiator 13 configured to radiate heat of the cooling water to outside of the polymer electrolyte fuel cell system 100.

In addition, as shown in Fig. 1, a three-way valve 16 is provided at a position in a pipe configured to connect a pipe connecting portion b (described later) of the impurity removal total enthalpy heat exchanger 15 to an oxidizing gas passage 1b (described later) of the polymer electrolyte fuel cell 1. The three-way valve 16 is provided at this position to switch a supply destination of the oxidizing gas exhausted from the impurity removal total enthalpy heat exchanger 15 between the polymer electrolyte fuel cell 1 and outside of the polymer electrolyte fuel cell system 100. In other words, by operating the three-way valve 16, the polymer electrolyte fuel cell system 100 in Fig. 1 is capable of discharging the oxidizing gas exhausted from the impurity removal total enthalpy heat exchanger 15 to outside (atmosphere) of the polymer electrolyte fuel cell system 100.

An operation principle and a construction of the impurity removal total enthalpy heat exchanger 15 which features the present invention will be described.

First, the operation principle of the impurity removal total enthalpy heat exchanger 15 will be described.

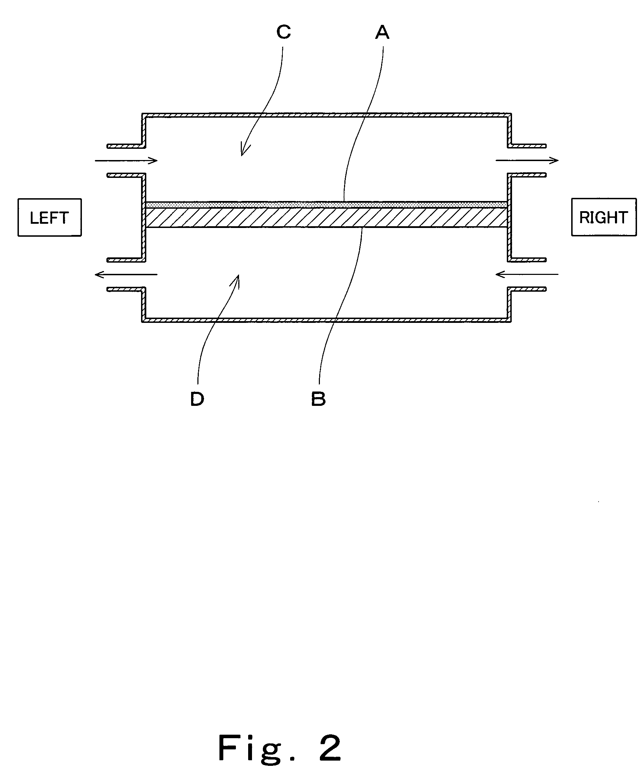

Fig. 2 is a schematic view conceptually explaining the operation principle of the impurity removal total enthalpy heat exchanger 15 according to the embodiment of the present invention. For the sake of convenience, right and left are defined as shown in Fig. 2.

Referring now to Fig. 2, in the interior of the impurity removal total enthalpy heat exchanger 15, there are provided an introducing passage C through which the oxidizing gas supplied from the air supply device 6 flows from the left to the right, and an exhaust passage D through which the oxidizing gas exhausted from the polymer electrolyte fuel cell 1 flows from the right to the left. The introducing passage C and the exhaust passage D are separated from each other by a hydrogen-ion conductive polymer electrolyte membrane B (total enthalpy heat exchange membrane). An impurity removal layer A is formed on a surface of the hydrogen-ion conductive polymer electrolyte membrane B on the introducing passage C side to remove the impurities such as nitrogen oxide and sulfur oxide or other organic compounds from the oxidizing gas. The impurity removal layer A is formed by porous adsorbent such as active carbon or silica gel, the porous adsorbent carrying at least one of transition metals such as platinum, palladium, rhodium, ruthenium, iridium, nickel, iron, copper, silver, and so on, or the porous adsorbent carrying at least one of metal oxides such as aluminum oxide, silicon oxide, zinc oxide, manganese oxide, iron oxide, calcium oxide, copper oxide, magnesium oxide, and so on, or the porous adsorbent carrying at least one of zeolite such as Mordenite, A-zeolite, MF-zeolite, β-zeolite, Faujasite, and so on. In the impurity removal total enthalpy heat exchanger 15 in Fig. 1 constructed as described above, the oxidizing gas supplied from the air supply device 6 in Fig. 1 contacts the impurity removal layer A and thereby the impurities contained in the oxidizing gas are, for example, adsorbed onto the impurity removal layer A. In this manner, the impurities are removed from the oxidizing gas. In addition, total enthalpy heat exchange is conducted between the oxidizing gas flowing within the introducing passage C and the oxidizing gas flowing within the exhaust passage D, so that the oxidizing gas within the introducing passage C is adjusted to have predetermined temperature and predetermined humidity. Then, the oxidizing gas which does not substantially contain the impurities and have been adjusted to have the predetermined temperature and the predetermined humidity, is supplied to the polymer electrolyte fuel cell 1 in Fig. 1. And, the oxidizing gas which has been used in total enthalpy heat exchange within the exhaust passage D is sent to the oxidizing gas water condenser 8 in Fig. 1. Removal of the impurities and the total enthalpy heat exchange for the oxidizing gas supplied from the air supply device 6 in Fig. 1 are carried out continuously during an operation of the polymer electrolyte fuel cell system 100.

Subsequently, a construction of the total enthalpy heat exchanger 15 will be described.

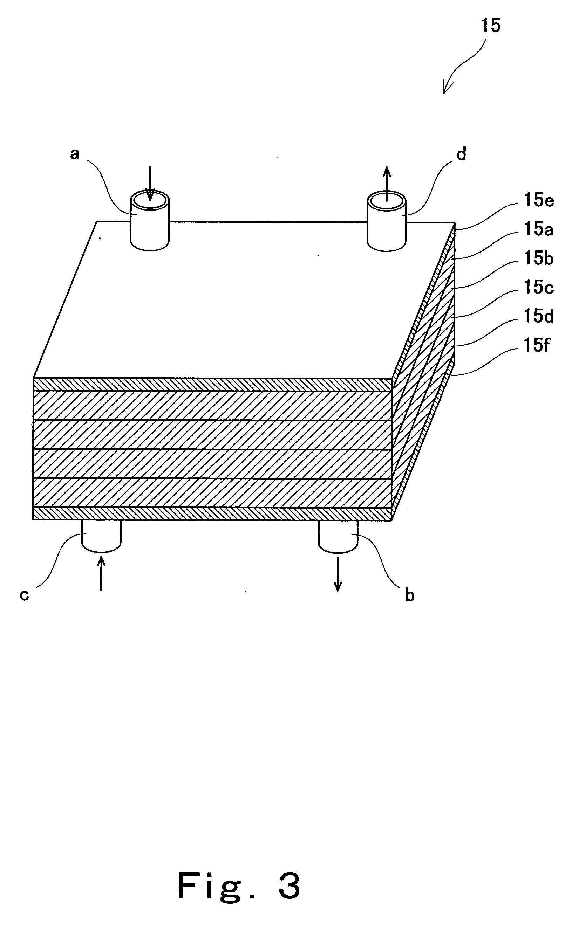

Fig. 3 is a perspective view schematically showing an example of the construction of the impurity removal total enthalpy heat exchanger 15.

As shown in Figs. 2 and 3, the impurity removal total enthalpy heat exchanger 15 comprises impurity removal total enthalpy heat exchange units 15a to 15d configured to perform removal of impurities, total enthalpy heat exchange, and the like, for the air supplied from the air supply device 6, impurity removal layer recovery heaters 15e and 15f configured to heat the impurity removal total enthalpy heat exchange units 15a to 15d to allow the impurities adsorbed onto the impurity removal layer A to be decomposed or separated to thereby recover a function of the impurity removal layer A, and pipe connecting portions a to d. Within each of the impurity removal total enthalpy heat exchange units 15a to 15d, the introducing passage and the exhaust passage extending in zigzag shape (not shown in Fig. 3) are separated from each other by the hydrogen-ion conductive polymer electrolyte membrane (not shown in Fig. 3) having the impurity removal layer, as already schematically shown in Fig. 2. And, the impurity removal total enthalpy heat exchange units 15a to 15d are stacked in such a manner that the introducing passages are connected in series and the exhaust passages are connected in series. An introducing end of the plurality of connected introducing passages is connected to the pipe connecting portion a and an exhaust end of the connected introducing passages is connected to the pipe connecting portion b. And, an introducing end of the plurality of connected exhaust passages is connected to the pipe connecting portion c and an exhaust end of the connected exhaust passages is connected to the pipe connecting portion d. The impurity removal total enthalpy heat exchanger 15 is connected to external equipment through the pipe connecting portions a to d. The impurity removal layer recovery heaters 15e and 15f are mounted to both end surfaces of the impurity removal total enthalpy heat exchange units 15a to 15d. By stacking the impurity removal total enthalpy heat exchange units 15a to 15d and the impurity removal layer recovery heaters 15e and 15f as described above, the impurity removal total enthalpy heat exchanger 15 performs a predetermined function.

Subsequently, a basic operation of the polymer electrolyte fuel cell system 100 according to the first embodiment will be described with reference to the drawings.

As shown in Fig. 1, in the polymer electrolyte fuel cell system 100 constructed as described above, for example, the city gas is reformed in the reformer 2, and thereby the hydrogen-rich fuel gas is generated. This fuel gas is humidified in the fuel gas humidifier 4 using water supplied from the water storage tank 9 by the fuel gas water pump 10, and then supplied to the polymer electrolyte fuel cell 1. Within the polymer electrolyte fuel cell 1, the fuel gas flows through the fuel gas passage lc provided within the polymer electrolyte fuel cell 1. After that, the fuel gas is sent to the fuel gas water condenser 5. The fuel gas remaining unconsumed after a power generation reaction in the polymer electrolyte fuel cell 1, which has been exhausted from the polymer electrolyte fuel cell 1, is cooled in the fuel gas water condenser 5 and thereby water is obtained. The water obtained from the fuel gas by the fuel gas water condenser 5 is stored in the water storage tank 9. And, the fuel gas which has been cooled and dehumidified is supplied to the burner 3 and combusted therein.

Meanwhile, the oxidizing gas supplied from the air supply device 6 flows into the introducing passage (not shown in Fig. 1) in the impurity removal total enthalpy heat exchanger 15 through the pipe connecting portion a. Within the impurity removal total enthalpy heat exchanger 15, the impurities are removed from the oxidizing gas by the impurity removal layer (not shown in Fig. 1) provided in the impurity removal total enthalpy heat exchanger 15, and the oxidizing gas is increased in temperature and humidified by total enthalpy heat exchange with the oxidizing gas exhausted from the polymer electrolyte fuel cell 1. After that, the oxidizing gas is supplied to the polymer electrolyte fuel cell 1 through the pipe connecting portion b and the three-way valve 16. In a normal condition, the three-way valve 16 is configured to cause the oxidizing gas to be supplied to the polymer electrolyte fuel cell 1. Within the polymer electrolyte fuel cell 1, the oxidizing gas flows through the oxidizing gas passage 1b provided within the polymer electrolyte fuel cell 1. At this time, an electric power is generated using the oxidizing gas flowing through the oxidizing gas passage 1b and the fuel gas flowing through the fuel gas passage 1c. The oxidizing gas remaining unconsumed after the power generation reaction in the polymer electrolyte fuel cell 1, which has flowed through the oxidizing gas passage 1b and has been exhausted from the polymer electrolyte fuel cell 1, flows into the exhaust passage (not shown in Fig. 1) of the impurity removal total enthalpy heat exchanger 15 through the pipe connecting portion c. The oxidizing gas remaining unconsumed after a reaction of the total enthalpy heat exchange in the impurity removal total enthalpy heat exchanger 15 is sent to the oxidizing gas water condenser 8. The oxidizing gas is cooled in the oxidizing gas water condenser 8 and thereby water is obtained by the oxidizing gas water condenser 8. This water is stored in the water storage tank 9. The oxidizing gas which has been cooled and dehumidified is returned to the air supply device 6 herein.

While generating an electric power, the polymer electrolyte fuel cell 1 is generating heat. Accordingly, in order to keep the polymer electrolyte fuel cell 1 at a constant temperature during power generation, the cooling water pump 14 operates to circulate the cooling water stored within the water storage tank 12 to cause the cooling water to flow through the cooling water passage 1a provided within the polymer electrolyte fuel cell 1. More specifically, the cooling water pump 14 operates so that the cooling water outflows from the water storage tank 12, then flows within the cooling water passage 1a provided within the polymer electrolyte fuel cell 1, and thereafter returns to the water storage tank 12. The cooling water which has increased in temperature due to heat generated by the polymer electrolyte fuel cell 1 and returned to the water storage tank 12, is cooled to a predetermined temperature in the heat radiator 13.

The polymer electrolyte fuel cell system 100 operates as described above, and a predetermined voltage is generated at an output terminal (not shown in Fig. 1) of the polymer electrolyte fuel cell 1. And, a user can properly operate electronic equipment, etc by electrically connecting an external connection terminal provided in the polymer electrolyte fuel cell system 100 and electrically connected to the output terminal of the polymer electrolyte fuel cell 1 to a power supply terminal of the electronic equipment, etc.

During the operation of the polymer electrolyte fuel cell system 100 constructed as described above, the oxidizing gas supplied from the air supply device 6 is increased in temperature and humidified to predetermined states by the impurity removal total enthalpy heat exchanger 15. Simultaneously, the impurities such as nitrogen oxide and sulfur oxide or other organic compounds, which may be contained in the oxidizing gas are effectively removed from the oxidizing gas. And, the oxidizing gas which has been increased in temperature and humidified to the predetermined states and does not substantially contain the impurities, is supplied to the polymer electrolyte fuel cell 1. In addition, the impurity removal layer recovery heaters 15e and 15f heat the impurity removal total enthalpy heat exchanger 15 as desired to cause the impurities remaining within the impurity removal total enthalpy heat exchanger 15 to be decomposed or separated, thus restoring an impurity removing function of the impurity removal total enthalpy heat exchanger 15 on a regular basis. In this case, the decomposed substances of the impurities or the separated impurities resulting from heating in the impurity removal total enthalpy heat exchanger 15 are discharged to outside of the polymer electrolyte fuel cell system 100 together with the oxidizing gas supplied from the air supply device 6 by switching the three-way valve 16 so that a supply destination of the oxidizing gas is outside the polymer electrolyte fuel cell system 100. In this construction, since the decomposed substances of the impurities or the separated impurities resulting from heating is inhibited from entering the polymer electrolyte fuel cell 1, it is possible to effectively avoid degradation of performance of the polymer electrolyte fuel cell 1 which would otherwise be caused by the decomposed substances of the impurities or the separated impurities. Consequently, it is possible to provide an inexpensive polymer electrolyte fuel cell system which is similar in construction to the conventional polymer electrolyte fuel cell system and can have improved electric characteristic and life characteristic for a long time period.

While in the first embodiment described thus far, the hydrogen-ion conductive polymer electrolyte membrane is employed as the total enthalpy heat exchange membrane, the total enthalpy heat exchange membrane employed in the fuel cell system of the present invention is not intended to be limited to this. Alternatively, a porous membrane may be employed so long as it functions as the total enthalpy heat exchange membrane. Further, in addition to the hydrogen-ion conductive electrolyte membrane or the porous membrane, any other membrane may be employed, so long as it functions as the total enthalpy heat exchange membrane. As used herein, "the membrane which functions as the total enthalpy heat exchange membrane" means a membrane which has a total enthalpy heat exchange function and does not degrade the quality of the oxidizing gas supplied to the polymer electrolyte fuel cell 1. More specifically, the membrane which functions as the total enthalpy heat exchange membrane is adapted to permit permeation of water and heat but not to permit permeation of chemical impurities or the like which may impede a power generation operation of the polymer electrolyte fuel cell, and allows a varying value of an oxygen partial pressure of the oxidizing gas supplied to the polymer electrolyte fuel cell to lie within a range in which power generation performance of the polymer electrolyte fuel cell is not substantially degraded, during total enthalpy heat exchange. Any membrane having such function can be employed as the total enthalpy heat exchange membrane, and by using such a membrane, the same effects as provided by the first embodiment can be obtained.

### (Example 1)

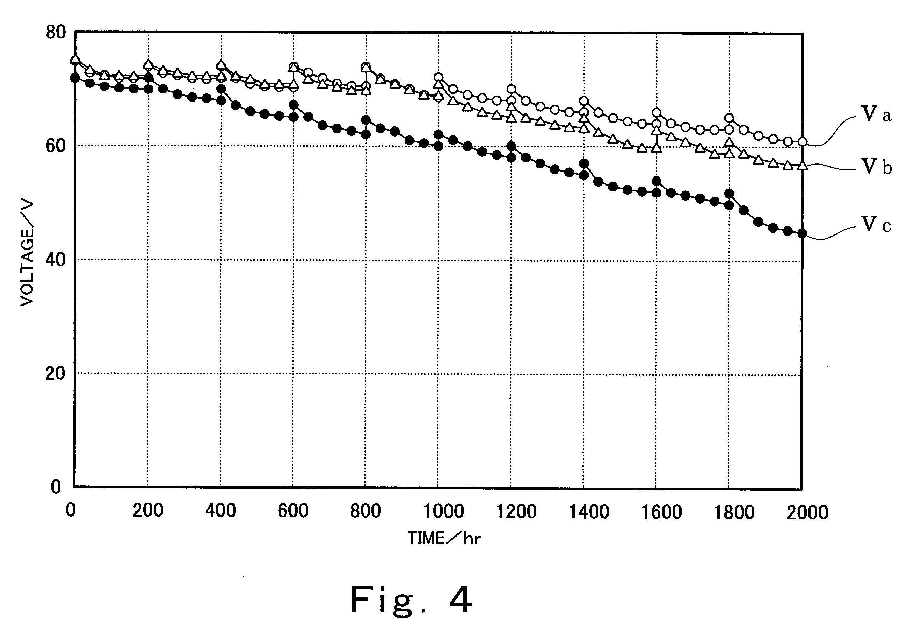

Fig. 4 is a graph showing a test result of a cell life test of the polymer electrolyte fuel cell system according to an example 1. In Fig. 4, a curve Va represents a time-lapse electromotive force of the polymer electrolyte fuel cell in a case where the impurity removal layer recovery heater heated the impurity removal layer every 200 hr, and a curve Vb represents a time-lapse electromotive force of the polymer electrolyte fuel cell in a case where the heater did not heat the impurity removal layer. In addition, a curve Vc represents a time-lapse electromotive force of the polymer electrolyte fuel cell in a case where the impurity removal layer was not used.

First of all, a method of manufacturing the polymer electrolyte fuel cell in the polymer electrolyte fuel cell system employed in the example 1 will be described.

In the polymer electrolyte fuel cell in the example 1, platinum particles having an average diameter of 30Å was carried on ketjen black EC (produced by AKZO Chemie Co.Ltd, Holland) which is electrically conductive carbon particles having an average primary particle diameter of 30nm in 50 wt % to produce cathode catalyst carrying particles. And, platinum particles and ruthenium particles each having an average diameter of 30Å were carried on ketjen black EC in 25 wt % to produce anode catalyst carrying particles. Then, water was added to each catalyst carrying particles and ethanol dispersion solution (Flemion produced by Asahi Glass Co.Ltd) of hydrogen-ion conductive polymer electrolyte was mixed and agitated. The hydrogen-ion conductive polymer electrolyte was coated on the surface of each catalyst carrying particles, thereby creating a catalyst layer ink. As the hydrogen-ion conductive polymer electrolyte, an ethanol dispersion solution of perfluorocarbonsulfonic acid of 9 wt % concentration was used. And, the amount of the hydrogen-ion conductive polymer electrolyte with respect to the electrically conductive carbon particles carrying catalyst thereon was 80 wt %. The water was added in order to inhibit combustion of a solvent of the hydrogen-ion conductive electrolyte, which would be caused by the catalyst of the catalyst carrying particles. The water which enables the entire catalyst to become moist, is sufficient in amount as the added water, and the amount is not particularly limited. In the example 1, the water three times as much as the weight of the catalyst was added. And, the cathode and anode catalyst layer inks so created were adjusted so that weight of noble metal contained in a reaction electrode was 0.5mg/cm² . Thereafter, these catalyst layer inks were coated on the surfaces of polytetrafluoroethylene bases by using a bar coater. The coated catalyst inks were thermally transferred to hydrogen-ion conductive polymer electrolyte membrane (Nafion 112 produced by Du Pont Co.Ltd) having a size of 20cm × 32cm and further, subjected to thermal treatment at 140°C for 10 min to adhere thereto. Through the above process, the hydrogen-ion conductive polymer electrolyte membrane having the catalyst layers was produced.

To produce the gas diffusion layer of the electrode, first, gas diffusion layer base was subjected to water-repellent treatment. More specifically, carbon paper (TGP-H-90 produced by TORAY Co. Ltd) which is a gas diffusion layer base having a size of 16cm × 20cm and a thickness of 270µm was impregnated in aqueous dispersion (Neoflon ND1 produced by Daikin Industries Co. Ltd) containing fluorocarbon polymers, and then dried. Further, the carbon paper was heated at 350°C for 30 min to render the carbon paper water-repellent. And, water-repellent carbon layer ink containing a mixture of electrically conductive carbon powders (acethylene black produced by Denki Kagaku Co. Ltd) and an aqueous solution (D-1 produced by Daikin Industries Co. Ltd) with PTFE fine powders dispersed therein, was coated on one of surfaces of the water-repellent carbon paper by using a doctor blade, and further subjected to thermal treatment at 300°C for 30 min, thereby producing the gas diffusion layer.

A membrane electrode assembly (hereinafter referred to as MEA) was manufactured in such a manner that two gas diffusion layers produced as described above were pressed against the hydrogen-ion conductive polymer electrolyte membrane having the catalyst layers under pressure from both sides by using a hot press with the other surfaces of the water-repellent carbon papers on which the water-repellent carbon ink layers were not coated in contact with the hydrogen-ion conductive polymer electrolyte membrane. In this case, pressing condition of the hot press was set to 120°C - 10kg/cm².

After manufacturing the MEA, gaskets were joined to outer peripheral portions of the hydrogen-ion conductive polymer electrolyte membrane of the MEA, and manifold holes were formed on the gaskets to allow cooling water, the fuel gas, and the oxidizing gas to flow therethrough. And, using two separators formed of resin-containing graphite plate having a size of 20cm x 30cm, and a thickness of 2.0mm, and provided with gas passages and cooling water passages having a depth of 1.0mm, a unit cell was created. Specifically, the unit cell was created in such a manner that the separator provided with an oxidizing gas passage was joined to one of the surfaces of the MEA and the separator provided with a fuel gas passage was joined to the other surface of the MEA. Further, 100 unit cells were stacked and stainless current collecting plates and insulating plates made of electric-insulating material were provided on both ends thereof. The resulting stack was fastened by using end plates and fastening rod, thereby manufacturing the polymer electrolyte fuel cell. In this case, a fastening pressure of the fastening rod was 10kg/cm² per area of the separator.

Subsequently, a method of manufacturing the impurity removal total enthalpy heat exchanger in the polymer electrolyte fuel cell system employed in the example 1 will be described.

To manufacture the impurity removal total enthalpy heat exchanger, a fibrous phenol based active carbon sheet (Kuractive CH produced by Kuraray Co.Ltd) was used as an impurity removal layer. And, as the hydrogen-ion conductive polymer electrolyte membrane provided in the heat exchnager, a hydrogen-ion conductive polymer electrolyte membrane (Nafion 112 produced by Du Pont Co. Ltd) similar to that of the fuel cell was used. The active carbon sheet was joined to one of the surfaces of the hydrogen-ion conductive polymer electrolyte membrane by using the hot press. In this case, the press condition of the hot press was set to 100°C - 10kg/cm². And, the hydrogen-ion conductive electrolyte membrane having the impurity removal layer produced in this manner was sandwiched between separators provided with introducing passages and exhaust passages formed in predetermined shape on the resin-containing graphite plates, thereby manufacturing an impurity removal total enthalpy heat exchange unit. The impurity removal total enthalpy heat exchanger was manufactured by continuously stacking 40 impurity removal total enthalpy heat exchange units. Furthermore, the impurity removal layer recovery heaters were mounted to an entire outer periphery of the impurity removal total enthalpy heat exchanger. The impurity removal layer recovery heaters were energized to heat the impurity removal total enthalpy heat exchanger up to about 120°C when the impurity removal layer adsorbed impurities of saturated adsorption amount or before the polymer electrolyte fuel cell system started or stopped a power generation operation. This heating decomposed the impurities contained in the impurity removal layer or separated the impurities therefrom. The decomposed substances of the impurities or the separated impurities were discharged to outside of the polymer electrolyte fuel cell system through the three-way valve. In this manner, impurity removing function of the impurity removal layer was restored. In addition, degradation of performance of the polymer electrolyte fuel cell, which would be caused by the separated impurities or the decomposed substances, was inhibited. The oxidizing gas supplied to the polymer electrolyte fuel cell was flowed through the introducing passage present on the side of the impurity removal layer formed on the hydrogen-ion conductive polymer electrolyte membrane, and the oxidizing gas exhausted from the fuel cell was flowed through the exhaust passage which directly contacted the hydrogen-ion conductive polymer electrolyte membrane.

In the cell life test of the polymer electrolyte fuel cell system according to the example 1, a polymer electrolyte fuel cell system constructed by using the polymer electrolyte fuel cell and the impurity removal total enthalpy heat exchanger manufactured as described above, and other desired components, and by piping and joining desired gas manifolds was employed. And, the cell life test was carried out under the condition in which a body of the polymer electrolyte fuel cell was kept at 75°C by flowing cooling water within the fuel cell, the fuel gas was a simulated gas of a reformed gas (hydrogen concentration: 80%, carbon dioxide concentration: 20%, and carbon monoxide concentration : 20ppm), the oxidizing gas was air (ambient air) supplied by using a blower, fuel gas utilization ratio (Uf) was 70%, and air utilization ratio (Uo) was 40%. From a test result shown in Fig. 4, it was revealed that the cell life characteristic (curve Va) in the case where the impurity removal layer recovery heater heated the impurity removal layer every 200 hr was better than the cell life characteristic (curve Vb) in the case where the heater did not heat the impurity removal layer. In addition, it was revealed that the cell life characteristic (curve Vc) in the case where the impurity removal layer was not used was by far worse than the above two cell life characteristics.

### (Example 2)

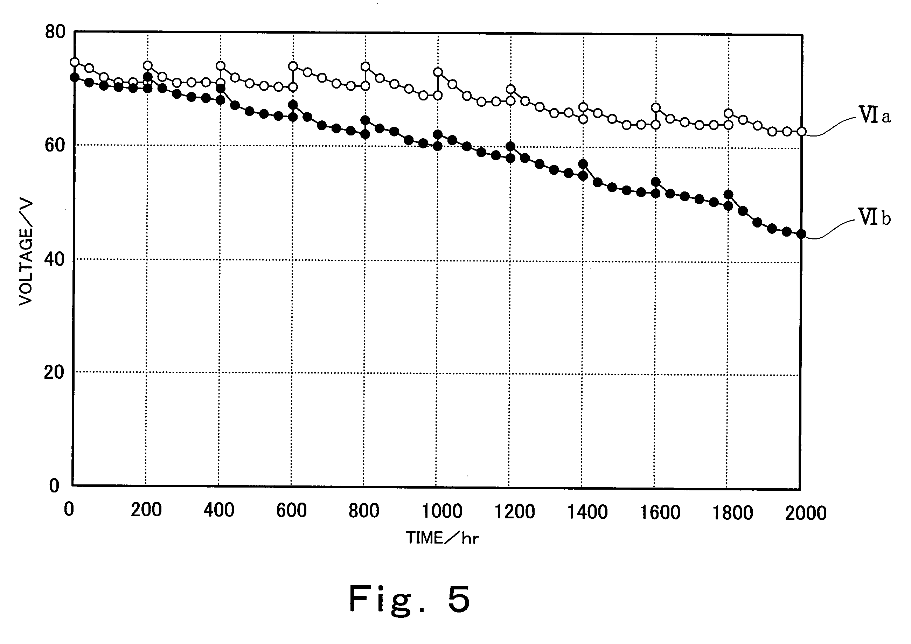

Fig. 5 is a graph showing a test result of a cell life test of a polymer electrolyte fuel cell system according to an example 2. In Fig. 5, a curve VIa represents a time-lapse electromotive force of the polymer electrolyte fuel cell in a case where the impurity removal layer recovery heater heated the impurity removal layer every 200 hr, and a curve VIb represents a time-lapse electromotive force of the polymer electrolyte fuel cell in a case where the impurity removal layer was not used. The polymer electrolyte fuel cell system employed in the example 2 is substantially identical to the polymer electrolyte fuel cell system in the example 1, except for the impurity removal layer. Therefore, how to manufacture the polymer electrolyte fuel cell and how to carry out the cell life test will not further described in the example 2. So, hereinbelow, a method of producing the impurity removal layer in an impurity removal total enthalpy heat exchanger in the polymer electrolyte fuel cell system employed in the example 2 will be described.

In the example 2, in order to produce the impurity removal layer, powdery active carbon (Kuraray coal produced by Kuraray chemical Co. Ltd) and ethanol dispersion solution (Flemion produced by Asahi Glass Co. Ltd) of the hydrogen-ion conductive polymer electrolyte were mixed and agitated, and impurity removal layer ink was adjusted so that a composition of a weight of the hydrogen-ion conductive polymer electrolyte with respect to a weight of the powdery active carbon was 50 wt %. And, the impurity removal layer ink was coated on the polytetrafluoroethylene base by using the bar coater so that the weight of the powdery active carbon was adjusted to be 1.0mg/cm². Then, the impurity removal layer ink coated on the polytetrafluoroethylene base was thermally transferred to one surface of the hydrogen-ion conductive polymer electrolyte membrane (Nafion 112 produced by Du Pont Co.Ltd) and further, subjected to thermal treatment at 140°C for 10 min to adhere thereto. In other process, the impurity removal total enthalpy heat exchanger was manufactured in the method described in the example 1. Using the polymer electrolyte fuel cell system of the example 2, the cell life test was carried out. From a test result shown in Fig. 5, it was revealed that the cell life characteristic (curve VIa) in the case where the impurity removal layer recovery heater heated the impurity removal layer every 200 hr was by far better than the cell life characteristic (curve VIb) in the case where the impurity removal layer was not used.

### (Example 3)

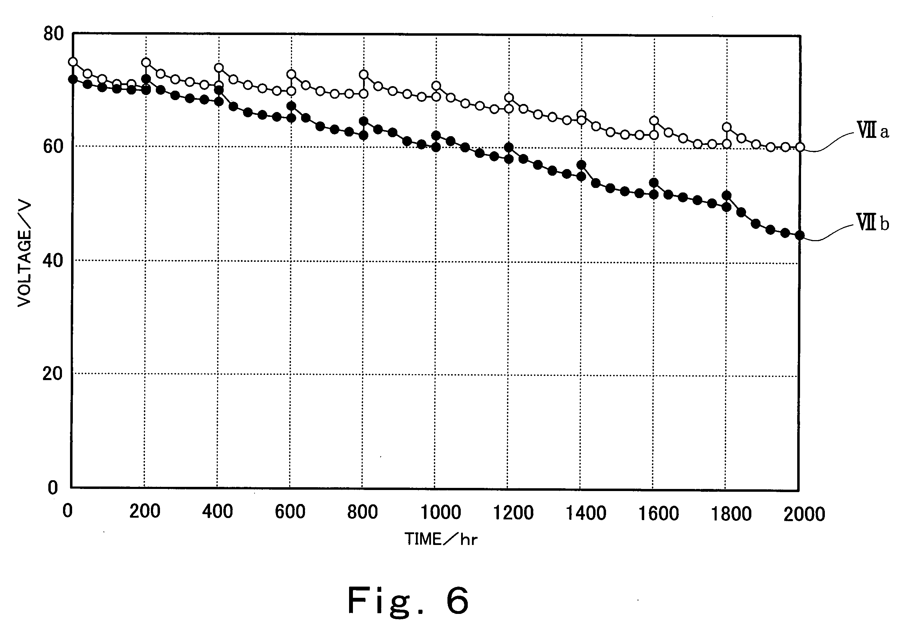

Fig. 6 is a graph showing a test result of a cell life test of a polymer electrolyte fuel cell system according to an example 3. In Fig. 6, a curve VIIa represents a time-lapse electromotive force of the polymer electrolyte fuel cell in a case where the impurity removal layer recovery heater heated the impurity removal layer every 200 hr, and a curve VIIb represents a time-lapse electromotive force of the polymer electrolyte fuel cell in a case where the impurity removal layer was not used. As in the example 2, the polymer electrolyte fuel cell system employed in the example 3 is substantially identical to the polymer electrolyte fuel cell system in the example 1, except for the method of producing the impurity removal layer. So, hereinbelow, the method of producing the impurity removal layer in the impurity removal total enthalpy heat exchanger in the polymer electrolyte fuel cell system employed in the example 3 will be described.

In the example 3, in order to produce the impurity removal layer, powdery active carbon (Kuraray coal produced by Kuraray chemical Co. Ltd), Mordenite (HSZ-690HOA produced by TOSOH Co. Ltd), and ethanol dispersion solution (Flemion produced by Asahi Glass Co. Ltd) of the hydrogen-ion conductive polymer electrolyte were mixed and agitated, and impurity removal layer ink was adjusted so that a composition of a weight of Mordenite with respect to a weight of the powdery active carbon was 30 wt %, and a composition of a weight of the hydrogen-ion conductive polymer electrolyte with respect to a total weight of the powdery active carbon and Mordenite was 50 wt %. And, the impurity removal layer ink was coated on a polytetrafluoroethylene base by using the bar coater so that the total weight of the powdery active carbon and the Mordenite was adjusted to be 1.4mg/cm². Then, the impurity removal layer ink coated on the polytetrafluoroethylene base was thermally transferred to one surface of the hydrogen-ion conductive polymer electrolyte membrane (Nafion 112 produced by Du Pont Co.Ltd) and further, subjected to thermal treatment at 140°C for 10 min to adhere thereto. In other process, the impurity removal total enthalpy heat exchanger was manufactured in the method described in the example 1. Using the polymer electrolyte fuel cell system of the example 3, the cell life test was carried out. From a test result shown in Fig. 6, it was revealed that the cell life characteristic (curve VIIa) in the case where the impurity removal layer recovery heater heated the impurity removal layer every 200 hr was by far better than the cell life characteristic (curve VIIb) in the case where the impurity removal layer was not used.

### (Example 4)

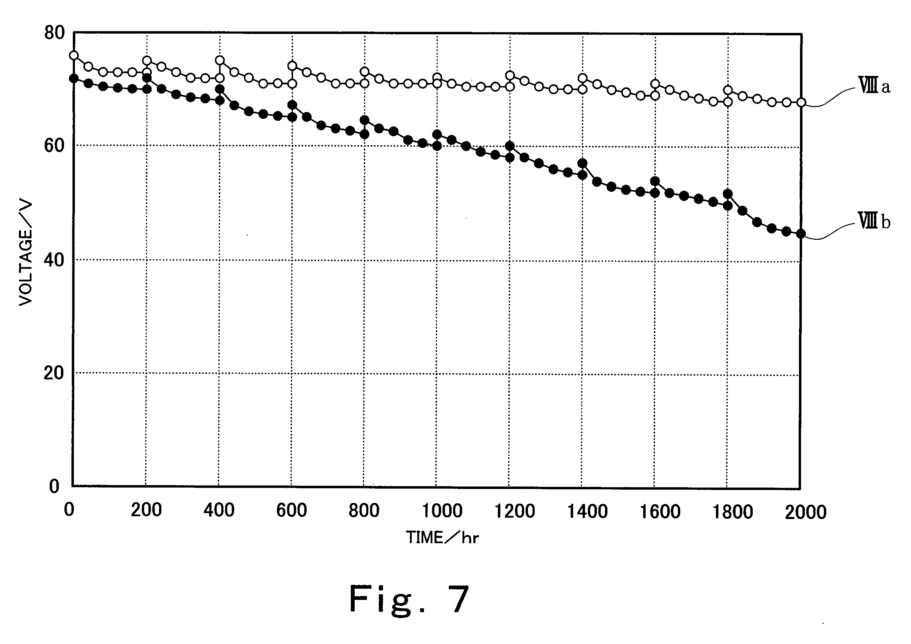

Fig. 7 is a graph showing a test result of a cell life test of a polymer electrolyte fuel cell system according to an example 4. In Fig. 7, a curve VIIIa represents a time-lapse electromotive force of the polymer electrolyte fuel cell in a case where the impurity removal layer recovery heater heated the impurity removal layer every 200 hr, and a curve VIIIb represents a time-lapse electromotive force of the polymer electrolyte fuel cell in a case where the impurity removal layer was not used. As in the examples 2 and 3, the polymer electrolyte fuel cell system employed in the example 4 is substantially identical to the polymer electrolyte fuel cell system in the example 1, except for the method of producing the impurity removal layer. So, hereinbelow, the method of producing the impurity removal layer in the impurity removal total enthalpy heat exchanger in the polymer electrolyte fuel cell system employed in the example 4 will be described.

In the example 4, the impurity removal layer was produced by a mixture containing powdery active carbon (Kuraray coal produced by Kuraray chemical Co. Ltd), platinum, and the hydrogen-ion conductive polymer electrolyte. Specifically, a chloroplatinic acid aqueous solution was dissolved in the aqueous solution with the powdery active carbon suspended therein, and alkaline reagent was added to this suspension for neutralization, thereby carrying Pt (OH)₄ on the powdery carbon powder. Thus adjusted suspension was filtered and water-washed repeatedly to allow the impurities to be removed. Thereafter, the obtained powdery active carbon was heated in a reduction atmosphere such as hydrogen atmosphere, thereby carrying platinum particles on the powdery active carbon. Further, the powdery active carbon with the platinum fine powders carried thereon and the ethanol dispersion solution (Flemion produced by Asahi Glass Co. Ltd) of the hydrogen-ion conductive polymer electrolyte were mixed and agitated, and impurity removal layer ink was adjusted so that a composition of a weight of the hydrogen-ion conductive polymer electrolyte with respect to a weight of the powdery active carbon was 50 wt %. And, the impurity removal layer ink was coated on the polytetrafluoroethylene base by using the bar coater so that the weight of the powdery active carbon was adjusted to be 1.0mg/cm². Then, the impurity removal layer ink coated on the polytetrafluoroethylene base was thermally transferred to one surface of the hydrogen-ion conductive polymer electrolyte membrane (Nafion 112 produced by Du Pont Co.Ltd) and further, subjected to thermal treatment at 140°C for 10 min to adhere thereto. In other process, the impurity removal total enthalpy heat exchanger was manufactured in the method described in the example 1. Using the polymer electrolyte fuel cell system of the example 4, the cell life test was carried out. From a test result shown in Fig. 7, it was revealed that the cell life characteristic (curve VIIIa) in the case where the impurity removal layer recovery heater heated the impurity removal layer every 200 hr was by far better than the cell life characteristic (curve VIIIb) in the case where the impurity removal layer was not used.

### (Embodiment 2)

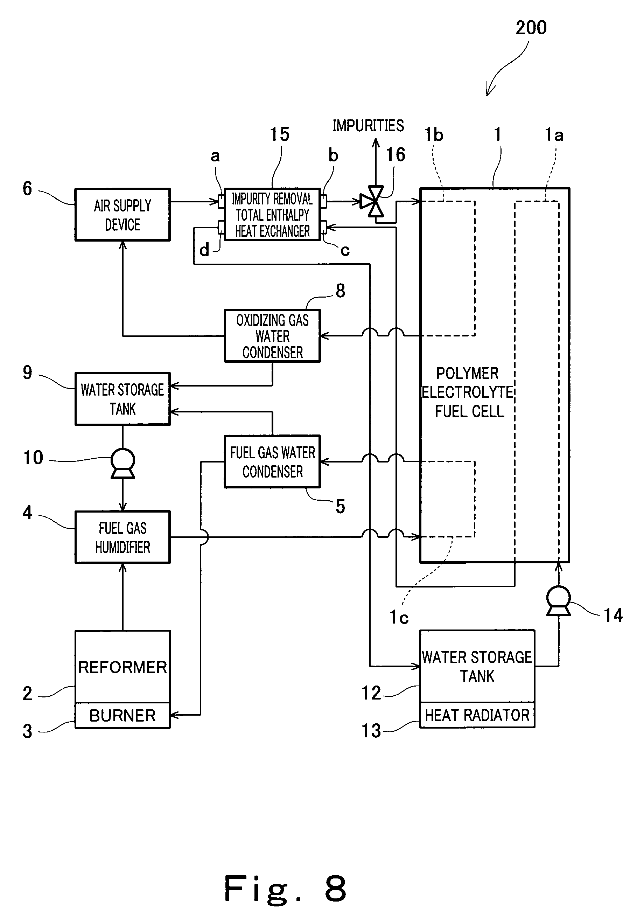

Fig. 8 is a block diagram schematically showing a construction of a polymer electrolyte fuel cell system according to a second embodiment of the present invention.

In the second embodiment, as a fluid subjected to total enthalpy heat exchange with the oxidizing gas in the impurity removal total enthalpy heat exchanger 15, cooling water exhausted from the polymer electrolyte fuel cell 1 is used. Specifically, the pipe connecting portion c which is an upstream end of the exhaust passage D (see Fig. 2) of the impurity removal total enthalpy heat exchanger 15 is connected to a downstream end of the cooling water passage 1a of the polymer electrolyte fuel cell 1, and the pipe connecting portion d which is a downstream end of the exhaust passage D (see Fig. 2) of the impurity removal total enthalpy heat exchanger 15 is connected to the water storage tank 12. And, a downstream end of the oxidizing gas passage 1b of the polymer electrolyte fuel cell 1 is connected to the oxidizing gas water condenser 8 through a pipe. In other respects, the second embodiment is identical to the first embodiment.

In the polymer electrolyte fuel cell system 200 of the second embodiment constructed as described above, the oxidizing gas is subjected to total enthalpy heat exchange with the cooling water which has cooled the polymer electrolyte fuel cell 1 in the impurity removal total enthalpy heat exchanger 15. In this construction, since heat which has been generated during power generation in the polymer electrolyte fuel cell 1 and recovered by the cooling water is used to heat the oxidizing gas, heat associated with power generation can be efficiently utilized.

In addition, since the cooling water sufficient to humidify the oxidizing gas exhausted from the polymer electrolyte fuel cell 1 is supplied to the impurity removal total enthalpy heat exchanger 15, total enthalpy heat exchange between the oxidizing gas supplied from the air supply device 6 and the cooling water is carried out more reliably.

While the impurity removal total enthalpy heat exchanger 15 and the polymer electrolyte fuel cell 1 are separate from each other in the first and second embodiments, the impurity removal total enthalpy heat exchanger 15 may alternatively be built in or mounted to the polymer electrolyte fuel cell 1. Such a construction can eliminate a pipe connecting the impurity removal total enthalpy heat exchanger 15 to the polymer electrolyte fuel cell 1. Consequently, the polymer electrolyte fuel cell system can be made smaller in size. Moreover, while the polymer electrolyte fuel cell system has been described in the first and second embodiments, the present invention is practicable in and applicable to other types of fuel cell systems.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention and all modifications which come within the scope of the appended claims are reserved.

## Claims

1. A fuel cell system comprising:
a fuel cell configured to generate an electric power using a fuel gas and an oxidizing gas supplied to said fuel cell; and
a total enthalpy heat exchanger configured to heat and humidify the oxidizing gas using heat and water exhausted from said fuel cell,
wherein said total enthalpy heat exchanger is capable of removing impurities contained in the oxidizing gas from the oxidizing gas.

2. The fuel cell system according to Claim 1, wherein said total enthalpy heat exchanger is equipped with a heater capable of decomposing or separating the removed impurities.

3. The fuel cell system according to Claim 1, wherein said total enthalpy heat exchanger has a total enthalpy heat exchange membrane configured to heat and humidify the oxidizing gas by total enthalpy heat exchange, and an impurity removal layer is formed on one principal surface of said total enthalpy heat exchange membrane, which contacts the oxidizing gas, to remove the impurities.

4. The fuel cell system according to Claim 1, wherein the oxidizing gas supplied to said fuel cell is heated and humidified using an oxidizing gas exhausted from said fuel cell.

5. The fuel cell system according to Claim 1, wherein the oxidizing gas supplied to said fuel cell is heated and humidified using cooling water exhausted from said fuel cell.

6. The fuel cell system according to Claim 3, wherein said impurity removal layer is formed of porous adsorbent.

7. The fuel cell system according to Claim 3, wherein said impurity removal layer is formed of porous adsorbent carrying transition metal thereon.

8. The fuel cell system according to Claim 7, wherein said transition metal is at least one of platinum, palladium, rhodium, ruthenium, iridium, nickel, iron, copper, and silver.

9. The fuel cell system according to Claim 3, wherein said impurity removal layer is formed of porous adsorbent carrying metal oxide thereon.

10. The fuel cell system according to Claim 9, wherein said metal oxide is at least one of aluminum oxide, silicon oxide, zinc oxide, manganese oxide, iron oxide, copper oxide, calcium oxide, and magnesium oxide.

11. The fuel cell system according to Claim 3, wherein said impurity removal layer is formed of porous adsorbent carrying zeolite thereon.

12. The fuel cell system according to Claim 11, wherein said zeolite is at least one of Mordenite, A-zeolite, MF-zeolite, β-zeolite, and Faujasite.

13. The fuel cell system according to Claim 6, wherein said porous adsorbent is made of active carbon or silica gel.

14. The fuel cell system according to Claim 7, wherein said porous adsorbent is made of active carbon or silica gel.

15. The fuel cell system according to Claim 8, wherein said porous adsorbent is made of active carbon or silica gel.

16. The fuel cell system according to Claim 9, wherein said porous adsorbent is made of active carbon or silica gel.

17. The fuel cell system according to Claim 10, wherein said porous adsorbent is made of active carbon or silica gel.

18. The fuel cell system according to Claim 11, wherein said porous adsorbent is made of active carbon or silica gel.

19. The fuel cell system according to Claim 12, wherein said porous adsorbent is made of active carbon or silica gel.

20. A method of operating a fuel cell system comprising a fuel cell configured to generate an electric power using a fuel gas and an oxidizing gas supplied to said fuel cell, and a total enthalpy heat exchanger configured to heat and humidify the oxidizing gas using heat and water exhausted from said fuel cell, said method comprising the steps of:
removing impurities contained in the oxidizing gas from the oxidizing gas in said total enthalpy heat exchanger;
heating said total enthalpy heat exchanger which has removed the impurities using a heater capable of decomposing or separating the impurities to decompose or separate the impurities, before said fuel cell starts or stops power generation; and
discharging the decomposed or separated impurities from said total enthalpy heat exchanger.
